(19) Europäisches Patentamt
European Patent Office
Office européen des brevets

(11) **EP 2 201 703 B1**

(12) **FASCICULE DE BREVET EUROPEEN**

(45) Date de publication et mention
de la délivrance du brevet:
**02.09.2015 Bulletin 2015/36**

(21) Numéro de dépôt: **08805186.7**

(22) Date de dépôt: **09.10.2008**

(51) Int Cl.:
***H04B 7/185*** *(2006.01)*     ***H04L 12/50*** *(2006.01)*
***H04L 12/58*** *(2006.01)*

(86) Numéro de dépôt international:
**PCT/EP2008/063545**

(87) Numéro de publication internationale:
**WO 2009/047297 (16.04.2009 Gazette 2009/16)**

(54) **SYSTÈME DE ROUTAGE ACARS PAR PROFIL DE ROUTAGE**

AUF ROUTING-PROFILEN BASIERENDES ACARS-ROUTINGSYSTEM

ROUTING-PROFILE-BASED ACARS ROUTING SYSTEM

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **11.10.2007 FR 0758211**

(43) Date de publication de la demande:
**30.06.2010 Bulletin 2010/26**

(73) Titulaire: **AIRBUS OPERATIONS**
**31060 Toulouse (FR)**

(72) Inventeurs:
• **TAMALET, Stéphane**
**F-31470 Fonsorbes (FR)**

• **GOBBO, Gilles**
**F-31140 Aucamville (FR)**
• **DURAND, Frédéric**
**F-31300 Toulouse (FR)**
• **DEVILLE, Jean-Georges**
**F-31500 Toulouse (FR)**

(74) Mandataire: **Ilgart, Jean-Christophe et al**
**BREVALEX**
**95, rue d'Amsterdam**
**75378 Paris Cedex 8 (FR)**

(56) Documents cités:
**WO-A-02/03572**     **FR-A- 2 787 658**
**US-A1- 2005 286 452**

EP 2 201 703 B1

**Description**

**DOMAINE TECHNIQUE**

La présente invention concerne de manière générale le domaine des télécommunications aéronautiques et plus particulièrement celui du routage ACARS (Aircraft *Communication and Reporting System*).

**ÉTAT DE LA TECHNIQUE ANTÉRIEURE**

Dans le domaine aéronautique, le système ACARS permet de transmettre des données entre un aéronef et une station au sol, notamment d'échanger des informations de type ARC (*Aeronautical Operational control*) avec les opérateurs de compagnies aériennes ou des informations de type ATC (*Air Traffic Control*) avec les contrôleurs aériens.
Le système ACARS peut utiliser plusieurs supports de transmission (appelés aussi média dans l'état de la technique), ou plus exactement plusieurs types de sous-réseaux pour transmettre les données, à savoir des sous-réseaux HF, VHF ou SATCOM. Le sous-réseau de télécommunication VHF permet des liaisons point à point en ligne de visée directe avec des émetteurs/ récepteurs au sol mais avec une portée relativement réduite. Le sous-réseau de télécommunication satellitaire SATCOM fournit par contre une couverture mondiale, à l'exception des zones polaires, mais avec des coûts de communication élevés. Le sous-réseau HF permet quant à lui de couvrir les zones polaires. La liaison de données entre bord et sol est quelquefois désignée par le terme générique de « datalink ».
Généralement, la transmission de données vers le sol se fait au moyen d'un routeur ACARS. Ce routeur se présente sous la forme d'un équipement de gestion des communications ou CMU (*Communications Management Unit*) qui sélectionne le support de transmission (VHF, HF, SATCOM) en fonction d'un certain nombre de paramètres.
En pratique, lorsqu'une application avionique veut transmettre un message au sol, elle envoie ce message au routeur ACARS accompagné d'une information auxiliaire indiquant, pour chaque support d'information, s'il peut être utilisé pour la transmission et dans quel ordre de préférence. Par exemple, l'application avionique pourra indiquer : média HF interdit ; préférence 1 : média VHF ; préférence 2 : média SATCOM. Le CMU reçoit alors le message, analyse l'information auxiliaire et choisit le média de transmission en conséquence. Dans le cas de l'exemple précité, si le média VHF est disponible, le message est envoyé via ce dernier. Sinon, le média SATCOM sera choisi pour la transmission. Un système selon l'exemple précité est par exemple le brevet WO 02/03572 A
Un tel système de routage présente un certain nombre d'inconvénients.
Tout d'abord, si l'on souhaite que le routeur ACARS puisse utiliser de nouveaux supports de transmission, tel que par exemple des liaisons WiMax, WiFi, GSM ou UMTS, les applications avioniques doivent être modifiées pour intégrer le choix de ces média dans les informations auxiliaires. Ces modifications nécessitent que les applications en question fassent l'objet d'une nouvelle procédure de certification, longue et coûteuse.
Ensuite, le routage effectué ne prend pas en compte les coûts et les performances des différents supports de transmission. Par exemple, en cas de variation relative des coûts d'utilisation de ces médias, l'ordre de préférence indiqué dans l'information auxiliaire peut s'avérer inapproprié.
Enfin, les options de routage sont relativement limitées et insusceptiblés de customisation par la compagnie aérienne.
Le but de la présente invention est de remédier aux inconvénients précités et notamment de proposer un système de routage évolutif, flexible et customisable, ne nécessitant pas de nouvelle certification des applications avioniques.

**EXPOSÉ DE L'INVENTION**

La présente invention est définie par un système de routage de messages ACARS vers une pluralité de supports de transmission, destiné à être embarqué à bord d'un aéronef, ledit système comprenant :

- une base de données contenant une pluralité de profils de routage, chaque profil étant constitué par une liste indiquant un rang de préférence pour chaque support de transmission ;
- des moyens de sélection pour extraire, d'une requête d'envoi de message ACARS, un identifiant de profil de routage, et pour sélectionner, dans le profil de routage stocké dans la base de données, correspondant au dit identifiant, un support de transmission, selon son rang de préférence, ledit support de transmission ainsi sélectionné étant ensuite utilisé pour la transmission du dit message.

Selon un premier mode de réalisation, la base de données contient, pour chaque identifiant, une pluralité de profils de routage correspondant à des zones géographiques et/ou des phases de vol distinctes.
Selon une second mode de réalisation, les moyens de sélection sont adaptés à recevoir une information de position du dit aéronef, et à déterminer, pour un identifiant donné, le profil de routage correspondant à la zone géographique et/ou phase de vol dans laquelle se trouve l'aéronef, puis à sélectionner, au sein du profil ainsi déterminé, un support de transmission selon son rang de préférence.

Selon une première variante des premier et second modes de réalisation, la base de données comprend en outre, pour chaque profil de routage, une liste de paramètres destinés à gérer des buffers de transmission associés aux différents supports de transmission.

Selon une seconde variante des premier et second modes dé réalisation, lesdits moyens de sélection sont adaptés à extraire en outre d'une requête d'envoi de message ACARS, une liste de paramètres destinés à gérer des buffers de transmission associés aux différents supports de transmission.

Selon une troisième variante des premier et second modes de réalisation, le système comprend en outre une seconde base de données contenant une pluralité de profils de paramétrage, chaque profil de paramétrage étant constitué par une liste de paramètres destinés à gérer des buffers de transmission associés aux différents supports de transmission, lesdits moyens de sélection étant adaptés à extraire d'une requête d'envoi de messages ACARS, un second identifiant et à récupérer un profil de paramétrage stocké sous cet identifiant.

Ladite liste de paramètres peut notamment comprendre les paramètres suivants : un paramètre indiquant le nombre maximal de tentatives de transmission sur un support sélectionné, un paramètre indiquant si le message est à supprimer en cas d'échec de transmission sur un support sélectionné, un paramètre indiquant si le message est supprimé si aucun support n'est disponible dans la liste, un paramètre indiquant si le message est à envoyer sur le support suivant de la liste au cas où le support sélectionné est occupé.

Les supports de transmission précités appartiennent par exemple au groupe constitué par des liaisons SATCOM, HF, VHF, GSM, UMTS, WiMax et Wi-Fi.

L'invention concerne également un système de routage ACARS tel que défini ci-dessus.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 représente schématiquement un système de routage selon un premier mode de réalisation de l'invention ;
La Fig. 2 représente schématiquement une procédure de routage selon le second mode de réalisation de l'invention.

## EXPOSÉ DÉTAILLÉ DE MODES DE RÉALISATION PARTICULIERS

L'idée à la base de la présente invention est de proposer un système de routage ACARS opérant une sélection de support de transmission en fonction de différents critères, par exemple un critère de coût, un critère de fiabilité, un critère de débit, un critère de rapport coût/performances. Un critère se traduit en pratique par un profil de routage indiquant les supports utilisables pour la transmission et leur ordre de préférence.

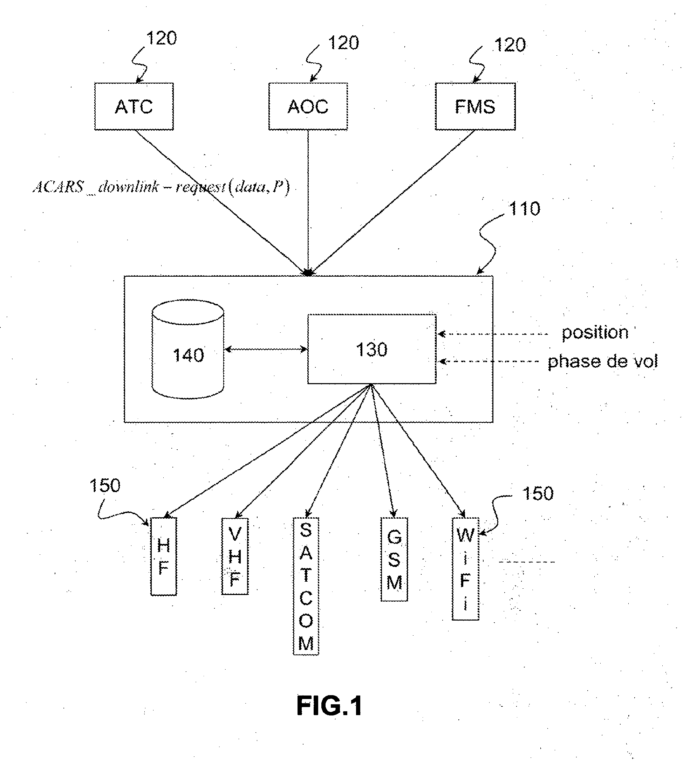

La Fig. 1 illustre de manière schématique un système de routage ACARS selon un mode de réalisation de l'invention.

Le système de routage 110 reçoit des messages ACARS d'applications avioniques, 120, par exemple d'une application de gestion du trafic aérien, dite ÀTC *(Air Trafic Control)* ou d'une application de gestion de vol, dite FMS (*Flight Management System*). Les applications avioniques, 120, communiquent avec des installations au sol grâce à des messages ACARS. Ainsi, une application de type ATC peut envoyer des messages ACARS, définis dans la norme Arinc 623, vers une station de contrôle au sol et en recevoir. De même une application de type AOC peut transmettre et recevoir des messages ACARS, définis dans la norme Arinc 633, du centre opérationnel de la compagnie aérienne.

Les messages sont transmis via une pluralité de supports de transmission, 150, par exemple des sous-réseaux classiquement utilisés en aéronautique tels que SATCOM, VHF, HF mais aussi des sous-réseaux de type grand public tels que GSM, UMTS, WiFi ou WiMAx.

Le système de routage, 110, comprend des moyens de sélection, 130, connectés à une base données, 140. Les moyens de sélection, 130, reçoivent des requêtes d'envoi de messages ACARS des différentes applications avioniques et extraient de chaque requête un identifiant de profil de routage. Cet identifiant se présente comme une information auxiliaire, concaténée aux données transmises par l'application. Ainsi, une requête d'envoi aura généralement la forme suivante : *A CARS_downlink - request* (*data*, *P*) où *P* est un identifiant de profil de routage pour la transmission des données *data*.

La base de données comprend une entrée pour chaque identifiant, une liste de rangs de préférence des différents supports de transmission étant stockée pour chaque profil. Un profil de routage d'identifiant *P* est défini par un vecteur $\sigma_P = (\sigma_P(media\_1), \sigma_P(media\_2),...,\sigma_P(media\_N))$ où N est le nombre de supports de transmission, *média_1*, *média_2*,..., *media_N* sont les supports en question, et où $\sigma_P$ est une application attribuant à chaque support de trans-

3

mission un rang de préférence pour le profil en question. Un rang particulier, par exemple un rang de valeur nulle, pourra être attribué pour indiquer un support de transmission interdit. Le cas échéant, ce vecteur pourra comprendre plusieurs rangs de même valeur, auquel cas les supports correspondants pourront être choisis indifféremment pour la transmission du message.

Les moyens de sélection 130 récupèrent de la base de données 140, à partir de l'identifiant de profil $P$, la liste de rangs de préférence correspondante. Le support de transmission présentant le rang de plus haute préférence est tout d'abord sélectionné. Si, le support en question n'est pas disponible ou encore si la transmission échoue sur ce support, les moyens de sélection peuvent sélectionner un support de même rang, ou à défaut de rang suivant. L'ordre dans lequel les supports de même rang sont sélectionnés est indifférent.

Le processus de sélection est répété jusqu'à ce que le message soit envoyé ou que l'on constate un échec pour le support de moindre préférence, les supports de rang nul n'étant pas pris en compte dans la mesure où ils sont interdits.

Les profils de routage peuvent être prédéfinis par le constructeur ou customisés par la compagnie aérienne. Par exemple, le constructeur pourra proposer par défaut un profil de routage obéissant à un critère de moindre coût, un profil de routage obéissant à un critère de fiabilité maximale (moindre taux d'erreurs), un profil de routage obéissant à un critère de meilleur rapport coût/performances. La compagnie aérienne pourra ajouter des profils de routage supplémentaires qu'elle définira en spécifiant pour chacun d'entre eux les rangs de préférence respectifs qu'elle souhaite attribuer aux différents supports de transmission.

Le tableau 1 donne trois exemples de profils de routage stockés dans la base de données 140. Le profil $P_1$ correspond à un critère de moindre coût, le profil $P_2$ à un critère de fiabilité maximale, et le critère $P_3$ a été défini par la compagnie aérienne.

Tableau 1

| Média/profil de routage | $P_1$ | $P_2$ | $P_3$ |
|---|---|---|---|
| Satcom Data 2 | 6 | 5 | 1 |
| Satcom Data 3 via GACS and the ATN stack | 5 | 5 | 2 |
| HF DLS | 3 | 8 | 3 |
| HF RLS via GACS and the ATN stack | - | - | 4 |
| VHF Mode A with the VHF DSP 1 | 3 | 7 | 5 |
| VDL AOA with the VHF DSP 1 | 2 | 4 | 6 |
| VDL Mode 2 via GACS and the ATN stack with the VHF DSP 1 | 1 | 2 | 0 |
| VHF Mode A with the VHF DSP 2 | 7 | 6 | 0 |
| VDL AOA with the VHF DSP 2 | 4 | 3 | 0 |
| VDL Mode 2 via GACS and the ATN stack with the VHF DSP 2 | 4 | 1 | 0 |

Le tableau fournit pour chacun des profils $P_1$, $P_2$, $P_3$ les rangs de préférence respectifs des différents supports de transmission. Dans ce tableau une haute préférence se traduit par un faible rang. Bien entendu, une convention contraire pourrait être adoptée.

Par exemple, pour le profil $P_1$, la préférence sera donnée au support dénommé « VDL Mode 2 via GACS and the ATN stack with the VHF DSP 1 », autrement dit une liaison VHF émulée sur un réseau ATN grâce à un service GACS (Generic ATN Communication Service). Inversement, le support dénommé « SATCOM Data 2 » étant le plus onéreux, est le moins préféré.

De manière similaire, pour le profil $P_2$, la préférence est donnée au support dénommé « VDL Mode 2 via GACS and the ATN stack with the VHF DSP 1 » (ATN : Aeronautical Telecommunication Network). Inversement, le support dénommé « HF DLS » (DLS : Direct Link Service), c'est-à-dire la liaison HF, est le moins préféré.

Selon un second mode de réalisation, les moyens. de sélection 130 sont adaptés à recevoir une information de position de l'aéronef et/ou une indication de phase de vol, via un bus AFDX *(Avionics Full DupleX)* ou un bus conventionnel Arinc 429 (cf. flèches en trait discontinu en Fig. 1). Par exemple, l'information de position peut être fournie par le système de navigation et être constituée des coordonnées GPS de l'aéronef. L'indication de phase de vol peut être fournie par un capteur de proximité au sol ou encore un capteur de pression sur le train d'atterrissage.

Dans cette variante, la base de données est partitionnée en zones géographiques et/ou phases de vol. Les moyens de sélection opèrent alors la sélection du profil de routage en fonction de l'identifiant de profil extrait de la requête d'envoi, de la zone géographique dans laquelle se trouve l'aéronef et/ou de la phase de vol.

Le tableau 2 ci-dessous donne un exemple d'organisation de la base de données pour un système de routage selon le second mode de réalisation de l'invention, dans lequel seule une discrimination par zone géographique est envisagée. On remarque, que pour un identifiant P donné, la base de données contient un premier profil relatif à la zone Europe et un second profil relatif au reste du monde.

Tableau 2

| Zone | Média/Profil de routage | $P_1$ | $P_2$ | $P_3$ |
|---|---|---|---|---|
| E | Satcom Data 2 | 6 | 5 | 1 |
| U | Satcom Data 3 via GACS and the ATN stack | 5 | 5 | 2 |
| R | HF DLS | 3 | 8 | 3 |
| O | HF RLS via GACS and the ATN stack | 0 | 0 | 4 |
| P | VHF Mode A with the VHF DSP 1 | 3 | 7 | 5 |
| E | VDL AOA with the VHF DSP 1 | 2 | 4 | 6 |
|  | VDL Mode 2 via GACS and the ATN stack with the VHF DSP 1 | 1 | 2 | 0 |
|  | VHF Mode A with the VHF DSP 2 | 7 | 6 | 0 |
|  | VDL AOA with the VHF DSP 2 | 4 | 3 | 0 |
|  | VDL Mode 2 via GACS and the ATN stack with the VHF DSP 2 | 4 | 1 | 0 |
| A | Satcom Data 2 | 1 | 10 | 10 |
| I | Satcom Data 3 via GACS and the ATN stack | 2 | 9 | 9 |
| L | HF DLS | 3 | 8 | 8 |
| L | HF RLS via GACS and the ATN stack | 4 | 7 | 7 |
| E | VHF Mode A with the VHF DSP 1 | 5 | 6 | 6 |
| U | VDL AOA with the VHF DSP 1 | 6 | 5 | 5 |
| R | VDL Mode 2 via GACS and the ATN stack with the VHF DSP 1 | 7 | 4 | 4 |
| S | VHF Mode A with the VHF DSP 2 . | 8 | 3 | 3 |
|  | VDL AOA with the VHF DSP 2 | 9 | 2 | 2 |
|  | VDL Mode 2 via GACS and the ATN stack with the VHF DSP 2 | 10 | 1 | 1 |

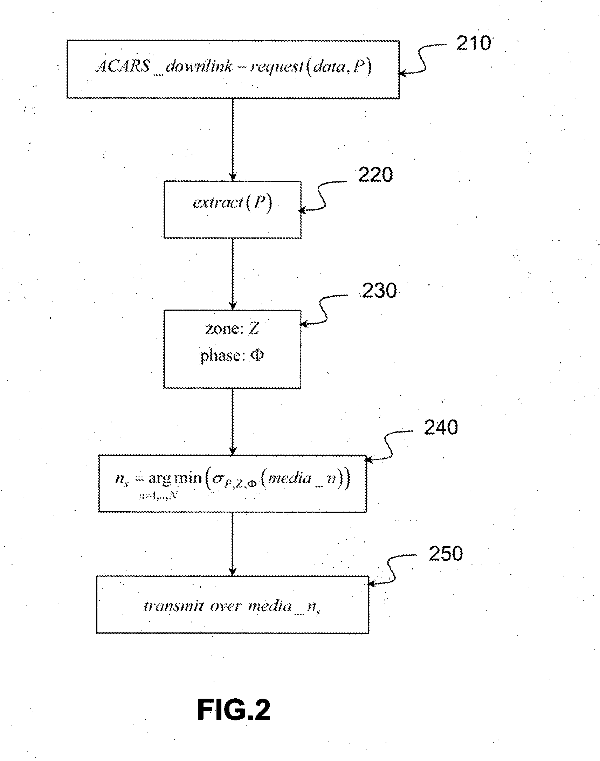

La Fig. 2 illustre une procédure de sélection de support de transmission selon un second mode de réalisation de l'invention.

A l'étape 210, une application avionique transmet au système de routage une requête d'envoi de message ACARS sur la liaison descendante, sous la forme *A CARS_downlink - request* (*data,P*).

A l'étape 220, les moyens de sélection extraient l'identifiant de profil, *P*, de la requête.

A l'étape 230, les moyens de sélection récupèrent une information, de position et/ou une indication de phase de vol de l'aéronef. Les moyens de sélection déduisent de l'information de position la zone géographique Z dans laquelle se trouve l'aéronef.

A l'étape 240, à partir de l'identifiant *P*, de la zone Z et de la phase de vol $\Phi$, les moyens de sélection récupèrent le profil correspondant $\sigma_{\mathbf{P},\mathbf{Z},\Phi}$ dans la base de données et sélectionne dans ce profil, le support de transmission ayant le rang de plus haute préférence, soit $n_s = \arg\min_{n=1,...,N}\left(\sigma_{P,Z,\Phi}\left(media\_n\right)\right)$. Par exemple, si P identifie le profil de moindre coût, Z est l'Europe, et $\Phi$ est la phase où l'aéroport est en stationnement à la porte d'embarquement, le support de transmission sélectionné sera une liaison WiFi.

A l'étape 250, le message est transmis sur le support sélectionné *media_n_s*.

Cette variante permet à chaque compagnie aérienne de choisir sa politique de communication avec le sol. Si de nouveaux médias apparaissent dans une zone géographique donnée, ou si les coûts relatifs de ces médias évoluent, il sera simplement nécessaire de mettre à jour la base de données sans avoir à certifier à nouveau les applications avioniques.

Selon une première variante du premier ou du second mode de réalisation, la base de données 140, contient en outre des paramètres de gestion de buffers de transmission pour chacun des profils de routage. A chaque support de transmission est associé un buffer dans lequel sont stockés les messages à envoyer sur ce support. En effet, les messages à transmettre sur un support de transmission ne sont généralement pas envoyés directement mais placés dans une fille d'attente. Les paramètres précités permettent de gérer le taux de remplissage des différents buffers. Par exemple, on pourra utiliser :

- un paramètre (« message retry counter ») indiquant le nombre maximal de tentatives de transmission sur le support sélectionné. Le buffer est purgé du message si la dernière tentative échoue ;
- un paramètre (« purge on com ») indiquant si le message est à supprimer en cas d'échec de transmission sur le support sélectionné. Le buffer associé à ce support est alors purgé en conséquence ;
- un paramètre (« purge on fail ») indiquant si le message est supprimé dans le cas où aucun support de transmission n'est disponible ;
- un paramètre (« next on busy ») indiquant si le message est à envoyer sur le support suivant (dans l'ordre de préférence) du profil de routage au cas où le support sélectionné est occupé.

Le tableau 3 illustre l'organisation de la base de données dans le cas de la variante précitée, pour le premier mode de réalisation de l'invention. La base de données contient, pour chaque profil, les paramètres de gestion de buffer de transmission associés à ce profil.

Tableau 3

| Média/profil de routage | $P_1$ | $P_2$ | $P_3$ |
|---|---|---|---|
| Satcom Data 2 | 6 | 5 | 1 |
| Satcom Data 3 via GACS and the ATN stack | 5 | 5 | 2 |
| HF DLS | 3 | 8 | 3 |
| HF RLS via GACS and the ATN stack | - | - | 4 |
| VHF Mode A with the VHF DSP 1 | 3 | 7 | 5 |
| VDL AOA with the VHF DSP 1 | 2 | 4 | 6 |
| VDL Mode 2 via GACS and the ATN stack with the VHF DSP 1 | 1 | 2 | 0 |
| VHF Mode A with the VHF DSP 2 | 7 | 6 | 0 |
| VDL AOA with the VHF DSP 2 | 4 | 3 | 0 |
| VDL Mode 2 via GACS and the ATN stack with the VHF DSP 2 | 4 | 1 | 0 |
| Message Retry Counter | 3 | 2 | 0 |
| Purge on no com | NO | YES | NO |
| Purge on Fail | YES | YES | NO |
| Next on busy | NO | YES | NO |

Selon une seconde variante de réalisation, les paramètres ne sont pas stockés dans la base de données mais fournis au moyen d'une information auxiliaire comprise dans la requête d'envoi du message. Plus précisément, pour un message à transmettre sur la liaison descendante, la requête d'envoi aura la forme *ACARS_downlink_request*(*data*, *P*, $\mu_1$, ...,$\mu_L$) où $\mu_1$,...,$\mu_L$ est une liste de paramètres de gestion de buffer de transmission. Les moyens de sélection sont adaptés à extraire ces paramètres au même titre que l'identifiant de profil et à contrôler les buffers en conséquence.

Selon une troisième variante de réalisation de l'invention, les moyens de routage comprennent outre une première base de données comprenant les profils de routage, une seconde base de données comprenant des profils de paramétrage de la transmission. Un profil de paramétrage est constitué par une liste de valeurs de paramètres prédéfinis, par exemple les paramètres de gestion de buffer de transmission.

Le tableau 4 illustre un exemple d'organisation de la seconde base de données avec les paramètres « message retry counter », « purge on com », « purge on fail », « next on busy » indiqués plus haut. Les profils de paramétrage $M_1$, $M_2$, $M_3$, $M_4$ sont prédéfinis par le constructeur ou bien définis par la compagnie aérienne. Pour un message à transmettre sur la liaison descendante, la requête d'envoi aura la forme *ACARS_downlink_request*(*data,P,M*) où *P* et *M* sont respectivement les identifiants de profils de routage et de paramétrage. L'identifiant *P* permet la sélection du support de transmission préféré dans la première base de données, alors que l'identifiant *M* permet de paramétrer l'utilisation des buffers de transmission.

Tableau 4

| Paramètres/ Profils de paramétrage | $M_1$ | $M_2$ | $M_3$ | $M_4$ |
|---|---|---|---|---|
| Message Retry Counter | 3 | 4 | 2 | 3 |
| Purge on no com | Yes | Yes | No | No |
| Purge on Fail | Yes | Yes | Yes | No |
| Next on busy | Yes | No | No | No |

Il est clair pour l'homme du métier que d'autres profils de paramètres peuvent être envisagés sans pour autant sortir du cadre de la présente invention.

**Revendications**

1. Système de routage de messages ACARS vers une pluralité de supports de transmission, destiné à être embarqué à bord d'un aéronef, **caractérisé en ce qu'**il comprend :

   - une base de données contenant une pluralité de profils de routage, chaque profil étant constitué par une liste indiquant un rang de préférence pour chaque support de transmission ;
   - des moyens de sélection pour extraire, d'une requête d'envoi de message ACARS, un identifiant de profil de routage, et pour sélectionner, dans le profil de routage stocké dans la base de données, correspondant au dit identifiant, un support de transmission, selon son rang de préférence, ledit support de transmission ainsi sélectionné étant ensuite utilisé pour la transmission du dit message.

2. Système de routage de messages ACARS selon la revendication 1, **caractérisé en ce que** la base de données contient, pour chaque identifiant, une pluralité de profils de routage correspondant à des zones géographiques et/ou des phases de vol distinctes.

3. Système de routage de messages ACARS selon la revendication 2, **caractérisé en ce que** les moyens de sélection sont adaptés à recevoir une information de position du dit aéronef, et à déterminer, pour un identifiant donné, le profil de routage correspondant à la zone géographique et/ou phase de vol dans laquelle se trouve l'aéronef, puis à sélectionner, au sein du profil ainsi déterminé, un support de transmission selon son rang de préférence.

4. Système de routage de messages ACARS selon l'une des revendications précédentes, **caractérisé en ce que** la base de données comprend en outre, pour chaque profil de routage, une liste de paramètres destinés à gérer des buffers de transmission associés aux différents supports de transmission.

5. Système de routage de messages ACARS selon l'une des revendications 1 à 3, **caractérisé en ce que** lesdits moyens de sélection sont adaptés à extraire en outre d'une requête d'envoi de message ACARS, une liste de paramètres destinés à gérer des buffers de transmission associés aux différents supports de transmission.

6. Système de routage de messages ACARS selon l'une des revendications 1 à 3, **caractérisé en ce qu'**il comprend en outre une seconde base de données contenant une pluralité de profils de paramétrage, chaque profil de paramétrage étant constitué par une liste de paramètres destinés à gérer des buffers de transmission associés aux différents supports de transmission, lesdits moyens de sélection étant adaptés à extraire d'une requête d'envoi de messages ACARS, un second identifiant et à récupérer un profil de paramétrage stocké sous cet identifiant.

7. Système de routage de messages ACARS selon l'une des revendications 4 à 6, **caractérisé en ce que** ladite liste de paramètres comprend les paramètres suivants : un paramètre indiquant le nombre maximal de tentatives de transmission sur un support sélectionné, un paramètre indiquant si le message est à supprimer en cas d'échec de transmission sur un support sélectionné, un paramètre indiquant si le message est supprimé si aucun support n'est disponible dans la liste, un paramètre indiquant si le message est à envoyer sur le support suivant de la liste au cas où le support sélectionné est occupé.

8. Système de routage de messages ACARS selon l'une des revendications précédentes, **caractérisé en ce que** les supports de transmission appartiennent au groupe constitué par des liaisons SATCOM, HF, VHF, GSM, UMTS, WiMax et Wi-Fi.

9. Aéronef comprenant un système de routage ACARS selon l'une des revendications précédentes.

**Patentansprüche**

1. System zum Routing von ACARS-Nachrichten in Richtung mehrerer Übertragungsmedien, das dazu bestimmt ist, an Bord eines Luftfahrzeugs mitgenommen zu werden, **dadurch gekennzeichnet, dass** es Folgendes aufweist:

   - eine Datenbank, die mehrere Routingprofile enthält, wobei jedes Profil durch eine Liste gebildet ist, die einen Präferenzrang für jedes Übertragungsmedium angibt;
   - Auswahlmittel zum Auslesen einer Routing-Profilkennung von einem ACARS-Nachrichten-Sendeaufruf und zum Auswählen eines Übertragungsmediums in dem in der Datenbank gespeicherten Routingprofil, das der Kennung entspricht, gemäß seinem Präferenzrang, wobei das so ausgewählte Übertragungsmedium dann für die Übertragung der Nachricht verwendet wird.

2. System zum Routing von ACARS-Nachrichten nach Anspruch 1, **dadurch gekennzeichnet, dass** die Datenbank für jede Kennung mehrere Routingprofile enthält, die verschiedenen geografischen Zonen und/oder Flugphasen entsprechen.

3. System zum Routing von ACARS-Nachrichten nach Anspruch 2, **dadurch gekennzeichnet, dass** die Auswahlmittel angepasst sind, um eine Positionsinformation des Luftfahrzeugs zu empfangen und für eine gegebene Kennung das Routing-Profil zu bestimmen, das der geografischen Zone und/oder der Flugphase entspricht, in der sich das Luftfahrzeug befindet, und dann in dem so bestimmten Profil ein Übertragungsmedium gemäß seinem Präferenzrang auszuwählen.

4. System zum Routing von ACARS-Nachrichten nach einem der vorhergehenden Ansprüche, **dadurch gekennzeichnet, dass** die Datenbank ferner für jedes Routingprofil eine Liste von Parametern aufweist, die dazu bestimmt sind, Übertragungspuffer zu verwalten, die den verschiedenen Übertragungsmedien zugehörig sind.

5. System zum Routing von ACARS-Nachrichten nach einem der Ansprüche 1 bis 3, **dadurch gekennzeichnet, dass** die Auswahlmittel angepasst sind, um ferner von einem ACARS-Nachrichten-Sendeaufruf eine Liste von Parametern auszulesen, die dazu bestimmt sind, Übertragungspuffer zu verwalten, die den verschiedenen Übertragungsmedien zugehörig sind.

6. System zum Routing von ACARS-Nachrichten nach einem der Ansprüche 1 bis 3, **dadurch gekennzeichnet, dass** es ferner eine zweite Datenbank aufweist, die mehrere Parametrisierungsprofile enthält, wobei jedes Parametrisierungsprofil durch eine Liste von Parametern gebildet ist, die dazu bestimmt sind, Übertragungspuffer zu verwalten, die den verschiedenen Übertragungsmedien zugehörig sind, wobei die Auswahlmittel angepasst sind, um von einem ACARS-Nachrichten-Sendeaufruf eine zweite Kennung auszulesen und ein unter dieser Kennung gespeichertes Parametrisierungsprofil wiederzugewinnen.

7. System zum Routing von ACARS-Nachrichten nach einem der Ansprüche 4 bis 6, **dadurch gekennzeichnet, dass** die Parameterliste die folgenden Parameter aufweist: einen Parameter, der die Höchstanzahl von Übertragungsversuchen auf einem ausgewählten Medium angibt, einen Parameter, der angibt, ob die Nachricht im Falle eines Fehlschlagens der Übertragung auf einem ausgewählten Träger zu beseitigen ist, einen Parameter, der angibt, ob die Nachricht beseitigt wird, wenn kein Medium in der Liste verfügbar ist, einen Parameter, der angibt, ob die Nachricht auf dem folgenden Medium der Liste zu senden ist, in dem Falle, in dem das ausgewählte Medium belegt ist.

8. System zum Routing von ACARS-Nachrichten nach einem der vorhergehenden Ansprüche, **dadurch gekennzeichnet, dass** die Übertragungsmedien zu der Gruppe gehören, die durch SATCOM-, HF-, VHF-, GSM-, UMTS-, WiMax- und Wi-Fi-Verbindungen gebildet ist.

9. Luftfahrzeug, das ein ACARS-Routingsystem nach einem der vorhergehenden Ansprüche aufweist.

**Claims**

1. A system for routing ACARS messages towards a plurality of transmission media, intended to be loaded onboard an aircraft, **characterized in that** it comprises:

   - a database containing a plurality of routing profiles, each profile being formed by a list indicating a rank of preference for each transmission medium;
   - selection means for extracting, from a ACARS message sending request, a routing profile identifier, and for selecting, in the routing profile stored in the database, corresponding to said identifier, a transmission medium according to its rank of preference, said thereby selected transmission medium being then used for transmitting said message.

2. The system for routing ACARS messages according to claim 1, **characterized in that** the database contains, for each identifier, a plurality of routing profiles corresponding to geographical areas and/or distinct flight phases.

3. The system for routing ACARS messages according to claim 2, **characterized in that** the selection means are adapted for receiving position information from said aircraft, and for determining for a given identifier, the routing profile corresponding to the geographical area and/or flight phase in which the aircraft is found, and then for selecting, within the thereby determined profile, a transmission medium according to its rank of preference.

4. The system for routing ACARS messages according to any of the preceding claims, **characterized in that** the database further comprises for each routing profile, a list of parameters intended for managing transmission buffers associated with different transmission media.

5. The system for routing ACARS messages according to any of claims 1 to 3, **characterized in that** said selection means are adapted for further extracting from a ACARS message sending request, a list of parameters intended for managing transmission buffers associated with different transmission media.

6. The system for routing ACARS messages according to any of claims 1 to 3, **characterized in that** it further comprises a second database containing a plurality of parameterization profiles, each parameterization profile being formed by at least parameters intended for managing transmission buffers associated with different transmission media, said selection means being adapted for extracting from a request for sending ACARS messages, a second identifier and for recovering a parameterization profile stored under this identifier.

7. The system for routing ACARS messages according to any of claims 4 to 6, **characterized in that** said list of parameters comprises the following parameters: a parameter indicating the maximum number of transmission attempts over a selected medium, a parameter indicating whether the message is to be deleted in the case of a transmission failure over a selected medium, a parameter indicating whether the message is deleted if no medium is available in the list, a parameter indicating whether the message is to be sent over the next medium of the list in the case when the selected medium is busy.

8. The system for routing ACARS messages according to any of the preceding claims, **characterized in that** the transmission media belong to the group formed by SATCOM, HF, VHF, GSM, UMTS, WiMax and Wi-Fi links.

9. An aircraft comprising an ACARS routing system according to any of the preceding claims.

120
120
120

ATC          AOC          FMS

$ACARS\_downlink-request(data,P)$

110

140 ⟷ 130

position

phase de vol

150

H F

V H F

S A T C O M

G S M

W i F i

150

**FIG.1**

$ACARS\_downlink - request(data, P)$ — 210

$extract(P)$ — 220

zone: $Z$
phase: $\Phi$ — 230

$n_x = \underset{n=1,\dots,N}{\arg\min}\left(\sigma_{P,Z,\Phi}\left(media\_n\right)\right)$ — 240

$transmit\ over\ media\_n_x$ — 250

**FIG.2**

## RÉFÉRENCES CITÉES DANS LA DESCRIPTION

**Documents brevets cités dans la description**

- WO 0203572 A